# EUROPEAN PATENT APPLICATION

(11) **EP 2 107 370 A2**
(43) Date of publication of application: **07.10.2009**
(21) Application number: 09250887.8
(22) Date of filing: 27.03.2009
(51) Int. Cl.: G01N 29/04, G01N 29/22, G01N 29/24, G01N 25/72

(54) **Inspection and repair process using thermal acoustic imaging**

(30) Priority: 02.04.2008 US 80387
(71) Applicant: United Technologies Corporation, Hartford, CT 06101 (US)
(72) Inventor: Greene, William H., Coventry, CT 06238 (US)
(74) Representative: Tomlinson, Kerry John

(57) **Abstract**

A method of repairing a metal component of a turbine engine includes removing (120, 130) the existing protective coating and cleaning (140) the surface. The surface is then inspected (150) for intergranular attack (IGA) and other damage by the nondestructive technique of thermal acoustic imaging (TAI). The surface containing IGA and other damage is repaired (160) and then recoated (180, 190) with the protective coating and returned (200) to service.

## Description

### BACKGROUND

The present invention relates to a method of inspection and repair of gas turbine engine components

Although nickel based, cobalt based and iron based superalloy gas turbine engine components, particularly blades and vanes, have protective coatings, the operating conditions in the hot gas flow path degrade the coatings to the point where they eventually require replacement or repair. For economic reasons, repair is the method of choice. Generally, superalloy components include substrates that are coated with at least one high aluminum content alloy that forms an aluminum oxide (alumina) surface layer to protect the component from oxidation in service. For other applications, the high aluminum content bondcoat is coated with at least one ceramic thermal barrier coat (TBC) such as yttria stabilized zirconia. During engine service, the TBC degrades and some portions are eroded and others totally eliminated by spalling. At the same time, interdiffusion causes the bondcoat to lose aluminum to the substrate resulting in lower effective oxidation resistance. Finally, creep, high cycle fatigue, and incipient melting initiate surface cracks in the substrate.

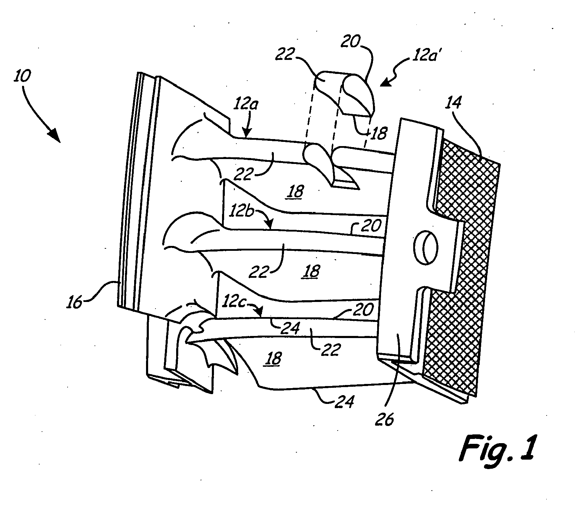

During the repair process, some or all of the coatings need to be removed. Generally, the ceramic TBC is removed by autoclave cleaning in caustic solutions, grit blasting, and other methods known in the art. The bondcoat is generally removed by acid stripping by exposing the bondcoat to aqueous solutions of hydrochloric, nitric or sulfuric acids and other chemicals known in the art. Additionally, the surfaces are treated with high temperature hydrogen fluoride (HF) gas to remove oxidation and other contamination by transforming oxides and other contamination into volatile fluorides. These cleaning treatments generally cause intergranular attack (IGA) of grain boundaries in the underlying substrate that results in fissures that weaken the substrate. FIG. 1 is a perspective view of a gas turbine engine component such as, but not limited to, a vane assembly 10 that may be part of a low pressure turbine or a high pressure turbine. Vane assembly 10 may also be referred to as a nozzle segment, and may be formed by casting of a metal alloy such as, for example, a nickel base or cobalt base superalloy. Vane assembly 10 includes vanes 12a, 12b, 12c (also known as airfoils), shroud 14, and bottom platform 16. Each of vanes 12a-12c includes pressure side 18, suction side 20, leading edge 22, and trailing edge 24. In FIG. 1, a portion 12a' of vane 12a has been removed. Although FIG. 1 shows vane assembly 10 having three vanes, it should be appreciated by a person of ordinary skill in the art that vane assembly 10 may include any number of vanes. At least some known conventional means of detecting and examining IGA and other surface imperfections includes cutting a section out of the component for metallographic examination to determine the density, depth, and severity of the surface attack. Following cleaning, the component is inspected for defects. The prior art method of inspection consists of destructively removing portion, 12a', for instance from the leading edge of vane 12a as illustrated in FIG. 1 and examining the cross-section metallographically to determine the extent of IGA, thermal fatigue cracking, and other service induced damage. Following inspection, a replacement part needs to be fabricated, inserted and joined in. Destructive testing for IGA is expensive and time consuming. Although a replacement piece is welded or brazed to the component to repair the part following the analysis, the component was subjected to destructive cutting to achieve such analysis.

### SUMMARY

The present disclosure relates to a method of repairing an engine run superalloy turbine component. In the process, the protective coating including at least one of a ceramic thermal barrier coating and an underlying bondcoat is removed to expose the superalloy substrate. The substrate is then cleaned by, for instance, high temperature exposure to HF gas and hydrogen. The surface is then inspected for defects such as intergranular attack (IGA), incipient melting, thermal fatigue fracture, and other subsurface defects. In contrast to known methods of inspection by removing a piece from the part for metallographic examination, the nondestructive inventive inspection process, preferably of thermal acoustic imaging (TAI), to reveal IGA and other defects is disclosed. Following inspection the surface is repaired, the protective coating is reapplied and the part is returned to service.

Another embodiment includes an engine run superalloy turbine component that has been repaired by removing the thermal barrier coating and bondcoat, cleaned, nondestructively inspected preferably by thermal acoustic imaging, repaired, recoated, and returned to service.

### BRIEF DESCRIPTION OF THE DRAWINGS

FIG. 1 is a perspective view of a vane assembly for use in a gas turbine engine.

FIG. 2 illustrates steps of a gas turbine engine component repair process.

### DETAILED DESCRIPTION

In FIG. 1, the vanes 12a, 12b, 12c typically have protective environmental barrier coatings (EBC) to protect them from thermal and erosive conditions in the hot gas flow path of the turbine engine. The coatings include at least a high aluminum alloy overlay such as a nickel aluminide, a platinum modified nickel aluminide or MCrAlY where M is Ni, Co, Fe or mixtures thereof. Upon exposure to a high temperature oxidative environment, a well adhered alumina layer forms on the protective coating that resists further oxidation. These environmental barrier coatings are typically covered with a ceramic thermal barrier coat (TBC) on regions where components are exposed to the most severe (temperature, gas flow, and particulate content) conditions such as those that exist in the high temperature turbine portion of the engine. A common TBC known to those in the art is yttria stabilized zirconia containing for instance 7 weight percent yttria.

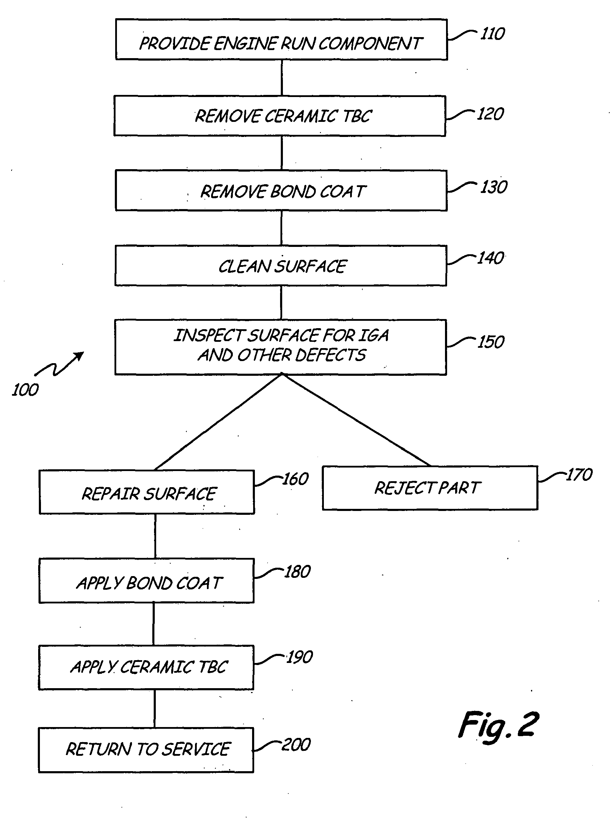

A process 100 of repairing an engine run turbine component is shown in FIG. 2. First, the component to be repaired is provided (step 110). Next, if the component has a ceramic thermal barrier coat, the TBC needs to be removed (step 120) from the substrate. The ceramic TBC can be removed by any method known in the art. Generally, the TBC may be removed by soaking the part in a solution of potassium hydroxide (KOH) at elevated temperature and pressure in an autoclave followed by grit blasting.

Next, the metallic bondcoat is removed (step 130). The bondcoat can be removed from the substrate by any method known in the art. For example, the component may be immersed in an agitated stripping solution including an aqueous solution of at least one of hydrochloric, nitric, and sulfuric acids and other chemical additives. After stripping, the component is inspected to ensure the bondcoat has been removed. This is carried out by placing the component in a furnace for heat tint. The absence of heat tint indicates the coating is removed.

Following removal of the bondcoat (step 130), the substrate is cleaned to further remove any residual surface oxide, oxide particles, and/or sulfite particles (step 140). This is carried out by any method known in the art, for instance, by grit blasting, ultrasonic cleaning, power flush cleaning, and HF cleaning. One form of HF cleaning includes exposing the component to a mixture of hydrogen fluoride and hydrogen gas at temperatures in excess of 1600°F. This cleans the internal surfaces of the defects and enhances wetting during brazing. However, the HF cleaning process also results in intergranular attack (IGA) in the substrate and degrades surface integrity.

The inventive process to examine IGA and other defects in turbine components disclosed herein is rapid and nondestructive. The process makes use of thermal acoustic imaging, which is a nondestructive method to detect surface and subsurface defects in structures. Thermal acoustic imaging is described in U.S. Patent No. 7,064,330, Raulerson et al., which is incorporated by reference herein. In the thermal acoustic imaging technique, broadband acoustic energy is introduced into a structure by transducers acoustically coupled to the structure or by other means known in the art. The acoustic energy produces mechanical vibrations which excite defective features of the structure such as cracks, delaminations, and other internal interfaces. Relative motion of opposing interfaces due to the excitation generates frictional heat and the resulting emission of infrared energy. The infrared energy is detected by an infrared camera whose imaging device includes a two dimensional array of infrared detectors (pixels). A signal from each pixel is detected and processed by an image processor. High resolution images are captured by subtracting the background image taken before acoustic excitation from the image taken after excitation and recording the time derivative of the signal from each pixel instead the signal itself. By measuring the signal strength as a function of time emitted from each defect, the depth of the defect below the surface can be ascertained. Thus, by employing thermal acoustic imaging, the location, size and depth of intergranular attack as well as other defects can be measured without needing to section a component.

During inspection (step 150), parts are sorted with respect to damage extent. Allowable damage is greater in extension plate 26 of shroud 14 and bottom platform 16 than in vane 12a, for instance, due to their different section thicknesses. In vane 12a, for instance, it may be desirable to impose limitations on the extent of IGA and cracking acceptable in the vane. For example, it may be preferable to limit IGA and cracking to depths no greater than about 3 mils (76 microns) in specific regions of the vane.

After the component is inspected and the repairable surface regions are identified, the surfaces are repaired (step 160). Larger cracks are mechanically routed, cleaned, and filled by welding. IGA regions and smaller cracks are repaired by brazing, using the methods identified in U.S. Patent No. 7,204,019, Ducotey, Jr. et al. and incorporated herein by reference. The method includes applying a paste consisting of two metallic powders having compositions close to or identical to the substrate, a binder and usually a fluxing agent. One of the powders has a composition preferably identical to the superalloy component and the other powder is also preferably close in composition to the superalloy but also containing a melting point depressant such as boron or silicon or mixtures thereof in a quantity to substantially depress the melting point. During repair, the superalloy article is heated to a processing temperature below its melting point at which time the second powder component melts while the first powder component remains solid. As the melting point depressant diffuses out of the melt into the first powder and the superalloy article, the mix solidifies in an isothermal manner to repair the IGA and other surface cracks.

Following surface repair (step 160), a bondcoat is reapplied to the component surface (step 180). The high aluminum content bondcoat may be a MCrAlY where M is one of nickel Ni, Cr, or Fe or mixtures thereof or a diffusion aluminide such as NiAl or platinum modified NiAl. A bondcoat may be deposited by using low or reduced pressure plasma spray (LPPS or RPPS), air plasma spray (APS), electron beam physical vapor deposition (EB-PVD) and/or any other method known in the art.

A ceramic thermal barrier coating (TBC) is then applied to the component (step 190). The TBC may include zirconium oxide (zirconia), stabilized with yttrium oxide (yttria), magnesium oxide (magnesia), calcium oxide (calcia), or mixtures thereof. Zirconia stabilized with 7 weight percent yttria is a preferred composition. Thermal barrier coatings can be deposited by thermal spraying (plasma, flame, and high velocity oxy fuel (HVOF)), sputtering, and electron beam physical vapor deposition (EB-PVD). EB-PVD is a desired technique because the ceramic coating has a columnar structure consisting of columns of ceramic material separated by gaps extending through the coating. The gaps allow considerable substrate expansion during thermal cycling and extend component lifetime by minimizing interfacial stresses that initiate spalling and delamination of the coating.

Following application of the ceramic thermal barrier coating (step 190), the component may be returned to service (step 200).

Although the present invention has been described with reference to preferred embodiments, workers skilled in the art will recognize that changes may be made in form and detail without departing from the scope of the invention, which is defined by the claims and their equivalents.

## Claims

1. A method of repairing an engine run superalloy component (10), the method comprising:
removing (120) a first ceramic thermal barrier coat from the component;
removing (130) a first bondcoat from the component;
cleaning (140) a surface of the component;
inspecting (150) the surface for intergranular attack and other defects using nondestructive inspection;
repairing (160) the surface;
reapplying (180) a second bondcoat;
reapplying (190) a second ceramic thermal barrier coat; and
returning (200) the component to service.

2. The method of claim 1, wherein the first ceramic thermal barrier coat is removed (120) by at least one of grit blasting and autoclave cleaning in a caustic solution.

3. The method of claim 1 or 2, wherein the first bondcoat is removed (130) by acid stripping in an aqueous solution comprising at least one of hydrochloric acid, sulfuric acid, and nitric acid.

4. The method of claim 3, wherein the component is agitated in the solution.

5. The method of claim 3 or 4, wherein the solution is heated.

6. The method of any preceding claim, wherein the surface is cleaned (140) by at least one of grit blasting, ultrasonic cleaning, power flush cleaning, and HF cleaning.

7. The method of any preceding claim, wherein the turbine component (10) comprises a nickel based or cobalt based superalloy.

8. The method of any preceding claim, wherein the nondestructive inspection (150) is thermal acoustic imaging.

9. The method of any preceding claim, wherein repairing (160) the surface is by welding and isothermal brazing.

10. The method of any preceding claim, wherein the second bondcoat is reapplied (180) by at least one of low pressure plasma spray (LPPS), reduced pressure plasma spray (RPPS), air plasma spray (APS), and electron beam physical vapor deposition (EB-PVD).

11. The method of any preceding claim, wherein the second ceramic thermal barrier coat is reapplied (190) by at least one of electron beam physical vapor deposition (EB-PVD) and a thermal spray process.

12. A superalloy component (10) that has been repaired by a method comprising: removing a ceramic thermal barrier coat of the component;
removing bondcoat of the component;
cleaning a surface of the component;
nondestructively inspecting the surface for intergranular attack and other defects;
repairing the surface;
reapplying a bondcoat to the surface;
reapplying a thermal barrier coat over the bondcoat.

13. The component of claim 12, wherein the superalloy is a nickel based, cobalt based or iron based superalloy.

14. The component of claim 12, wherein the inspecting (150) includes thermal acoustic imaging.
